# EUROPEAN PATENT APPLICATION

(11) **EP 4 395 034 A1**
(43) Date of publication of application: **03.07.2024**
(21) Application number: 22915028.9
(22) Date of filing: 29.12.2022
(51) Int. Cl.: H01M 50/291, H01M 50/258, H01M 50/204

(54) **BATTERY MODULE, BATTERY PACK, AND VEHICLE**

(30) Priority: 30.12.2021 CN 202123434534 U; 17.03.2022 CN 202210264796
(71) Applicant: BYD Company Limited, Shenzhen, Guangdong 518118 (CN)
(72) Inventor: SONG, Ru, Shenzhen, Guangdong 518118 (CN); LANG, Xiaoqiang, Shenzhen, Guangdong 518118 (CN); ZHOU, Yanfei, Shenzhen, Guangdong 518118 (CN)
(74) Representative: Arnold & Siedsma
(86) International application number: PCT/CN2022/143295
(87) International publication number: WO 2023/125778

(57) **Abstract**

A battery assembly, a battery pack, and a vehicle are provided. The battery assembly includes an inner housing and a battery module. Multiple grooves are defined in the inner housing. A space defined in each of the grooves is an accommodation cavity, to enable multiple accommodation cavities to be defined in the inner housing. The multiple accommodation cavities form an accommodation space. The battery module is arranged in each of the accommodation cavities, to enable the battery module to be arranged in the accommodation space.

## Description

### CROSS REFERENCE TO RELATED APPLICATIONS

The present disclosure is proposed based on Chinese Patent Application No. 202123434534.X filed on December 30, 2021 and No. 202210264796.6 filed on March 17, 2022, and claims priority to the above Chinese Patent Applications. The entire content of the above-referenced applications is incorporated herein by reference.

### FIELD

The present disclosure relates to the field of vehicle power battery manufacturing technologies, and more specifically, to a battery assembly, a battery pack, and a vehicle.

### BACKGROUND

In the related art, cells are usually arranged in vehicles to provide electric energy storage and output, and therefore stability of the cells is crucial for use of the vehicles. In the related art, a positioning member is usually arranged in a battery to fix assembly of a battery core. However, assembly stability of the battery is still not enough to satisfy current use of a high-power battery.

### SUMMARY

An object of the present disclosure is to provide a battery assembly, a battery pack, and a vehicle. A structure of the battery pack is relatively stable.

According to a first aspect of the present disclosure, a battery assembly is provided, including: an inner housing and a battery module. Multiple grooves are defined in the inner housing. A space defined in each of the grooves is an accommodation cavity, to enable multiple accommodation cavities to be defined in the inner housing. The multiple accommodation cavities form an accommodation space. The battery module is arranged in each of the accommodation cavities, to enable the battery module to be arranged in the accommodation space.

In some embodiments, a deformation buffer portion is arranged on the inner housing. The deformation buffer portion is deformable through contraction to contract the accommodation space. When the deformation buffer portion is deformed through contraction, the accommodation space contracts, and the inner housing abuts against the battery module.

In some embodiments, each accommodation cavity extends in a first direction of the inner housing, and the multiple accommodation cavities are arranged at intervals in a second direction of the inner housing. The deformation buffer portion extending in the first direction is arranged on the inner housing on at least one of two opposite sides in a third direction corresponding to each accommodation cavity.

In some embodiments, an opening of each groove is oriented toward a same side of the inner housing, and the deformation buffer portion is arranged on a side of the inner housing opposite to each opening.

In some embodiments, openings of two adjacent grooves are in opposite directions, and the deformation buffer portion is arranged on a side of the inner housing opposite to each opening.

In some embodiments, the deformation buffer portion is a concave body recessed toward the accommodation space. In a case that the inner housing is squeezed in the second direction, the concave body contracts in the second direction.

In some embodiments, the inner housing further includes a pressing plate. The pressing plate is arranged on each of two opposite sides of the inner housing in the second direction.

In some embodiments, the battery assembly further includes an upper pulling plate and a lower pulling plate. The upper pulling plate and the lower pulling plate are respectively arranged on the two opposite sides of the inner housing in the third direction.

In some embodiments, the upper pulling plate is connected to the inner housing by bonding, welding, or riveting, and the lower pulling plate is connected to the inner housing by bonding, welding, or riveting.

In some embodiments, the multiple grooves include a first groove and a second groove. The inner housing is bent and forms multiple first grooves and multiple second grooves staggered from each other. Openings of the first grooves are oriented in an opposite direction to openings of the second grooves. An inner housing positioning portion is further arranged on the inner housing. The battery module includes an end portion spacer arranged at an end portion of the battery module. A battery positioning portion is arranged on the end portion spacer. The battery positioning portion is positioned to mate with the inner housing positioning portion.

In some embodiments, the end portion spacer includes a first end portion spacer and a second end portion spacer arranged at two end portions of the battery module. A first battery positioning portion is arranged on the first end portion spacer. A second battery positioning portion is arranged on the second end portion spacer. The inner housing positioning portion includes a first inner housing positioning portion and a second inner housing positioning portion. The first inner housing positioning portion and the second inner housing positioning portion are respectively arranged on two ends of the first groove. The first inner housing positioning portion and the second inner housing positioning portion are respectively arranged on two ends of the second groove. The first inner housing positioning portion is positioned to mate with the first battery positioning portion, and the second inner housing positioning portion is positioned to mate with the second battery positioning portion.

In some embodiments, the first battery positioning portion is arranged on at least one side of the first end portion spacer and is constructed as a limiting bump. The first inner housing positioning portion is constructed as a limiting hole. The limiting bump is fitted into the limiting hole.

In some embodiments, the limiting bump is arranged on a side of the first end portion spacer. A groove wall of the first groove and a groove wall of the second groove each are provided with two limiting holes. The limiting bump is positioned to mate with the limiting hole.

In some embodiments, the first end portion spacer includes multiple first inner connectors and an outer spacing frame. The multiple first inner connectors are arranged in the outer spacing frame. The limiting bump is arranged on the outer spacing frame.

In some embodiments, the second battery positioning portion is arranged on at least one side of the second end portion spacer and is constructed as an elastic snap. The second inner housing positioning portion is constructed as an engagement hole, and the elastic snap is engaged in the engagement hole.

In some embodiments, the elastic snap is arranged on each of two sides of the second end portion spacer, and at least two elastic snaps arranged at intervals are arranged on each side of the second end portion spacer. A groove wall on each of two sides of the first groove and the second groove is provided with the engagement hole, and the elastic snap is engaged with the engagement hole.

In some embodiments, the second end portion spacer includes multiple second inner connectors and an outer protective cover. The multiple second inner connectors are arranged in the outer protective cover. The elastic snap is arranged on the outer protective cover.

In some embodiments, the battery module further includes multiple series-connected battery core assemblies, a middle spacer, and a protective film. The middle spacer is arranged between adjacent battery core assemblies, and the multiple series-connected battery core assemblies are arranged in the protective film.

According to a second aspect of the present disclosure, a battery pack is provided, including the battery assembly in the above embodiments.

In some embodiments, the battery pack further includes an outer tray. The inner housing is arranged in the outer tray.

In some embodiments, the opening of the first groove is upward, a first adhesive layer is arranged between a bottom plate of the first groove and a bottom of the outer tray, a first buffer pad is arranged on a bottom of the battery module in the first groove, and a second adhesive layer is arranged on a top of the battery module in the first groove; and/or the opening of the second groove is downward, a third adhesive layer is arranged on an outer side of a top plate of the second groove, a second buffer pad is arranged between a top of the battery module in the second groove and the top plate of the second groove, and a fourth adhesive layer is arranged on a bottom of the battery module in the second groove.

According to a third aspect of the present disclosure, a vehicle is provided, including the battery assembly in the above embodiments or the battery pack in the above embodiments.

According to an embodiment of the present disclosure, the battery positioning portion and the inner housing positioning portion are arranged and positioned to mate with each other, which not only can simplify an assembly process of the battery pack to improve assembly efficiency, but also can achieve more stable connection and assembly between the battery assembly and the inner housing, thereby improving use performance of the battery pack.

According to an embodiment of the present disclosure, the deformation buffer portion that is deformable through contraction is arranged on the inner housing, and the accommodation space is arranged in the inner housing. After the battery module is loaded into the accommodation space, a force may be applied to the inner housing, so that the deformation buffer portion on the inner housing is deformed through contraction to contract the accommodation space. In this way, it is ensured that two opposite sides of the inner housing can tightly press the battery module and provide a specific pretightening force for the battery module, thereby effectively increasing a cycle life of a battery.

Other features and advantages of the present disclosure become apparent through the following detailed description of exemplary embodiments of the present disclosure with reference to the accompanying drawings.

### BRIEF DESCRIPTION OF THE DRAWINGS

The accompanying drawings that are incorporated into and constitute a part of the specification illustrate embodiments of the present disclosure, and are used to explain the principle of the present disclosure together with the description.
FIG. 1 is a schematic structural diagram of a battery assembly according to an embodiment of the present disclosure.
FIG. 2 is a structural exploded view of a battery assembly according to an embodiment of the present disclosure.
FIG. 3 is a schematic diagram of an end surface of a battery assembly according to an embodiment of the present disclosure.
FIG. 4 is a schematic structural diagram of an inner housing of a battery assembly according to an embodiment of the present disclosure.
FIG. 5 is a sectional view of an inner housing of a battery assembly according to an embodiment of the present disclosure.
FIG. 6 is a partial enlarged view of an area A in FIG. 5.
FIG. 7 is a structural exploded view of a battery pack according to an embodiment of the present disclosure.
FIG. 8 is a schematic sectional view of a battery pack according to an embodiment of the present disclosure.
FIG. 9 is a schematic structural diagram of an inner housing according to an embodiment of the present disclosure.
FIG. 10 is a partial schematic enlarged view of a part A in FIG. 9.
FIG. 11 is a schematic structural diagram of an inner housing according to another embodiment of the present disclosure.
FIG. 12 is a partial schematic enlarged view of a part B in FIG. 11.
FIG. 13 is a schematic structural diagram of a battery module according to an embodiment of the present disclosure.
FIG. 14 is a schematic structural diagram of a first end portion spacer according to an embodiment of the present disclosure.
FIG. 15 is a schematic structural diagram of an outer protective cover according to an embodiment of the present disclosure.

### Reference numerals:

Battery assembly 100; Inner housing 20; Deformation buffer portion 11; Accommodation space 12; Accommodation cavity 121; Pressing plate 13; Battery module 30; Upper pulling plate 31; Lower pulling plate 32; Battery pack 1; Outer tray 10; First groove 210; Second groove 220; Inner housing positioning portion 230; First inner housing positioning portion 240; Second inner housing positioning portion 250; Battery core assembly 310; Battery core 311; Middle spacer 320; End portion spacer 330; First end portion spacer 331; First inner connector 3311; Outer spacing frame 3312; Second end portion spacer 332; Second inner connector 3321; Outer protective cover 3322; Protective film 340; Battery positioning portion 350; First battery positioning portion 351; Second battery positioning portion 352; First buffer pad 360; Second buffer pad 370; First adhesive layer 410; Second adhesive layer 420; Third adhesive layer 430; Fourth adhesive layer 440.

### DETAILED DESCRIPTION

Various exemplary embodiments of the present disclosure are described in detail with reference to the accompanying drawings. It should be noted that, unless otherwise specified, relative arrangement, numerical expressions, and numerical values of components and steps described in the embodiments do not limit the scope of the present disclosure.

The following description of at least one exemplary embodiment is actually merely illustrative, and in no way constitute any limitation on the present disclosure and application or use thereof.

Technologies, methods, and devices known to a person of ordinary skill in the related art may not be discussed in detail, but in proper circumstances, the technologies, methods, and devices shall be regarded as a part of the specification.

In all examples that are shown and discussed herein, any specific value should be construed only as an example but not a limitation. Therefore, other examples of the exemplary embodiments may have different values.

It should be noted that, similar reference numerals and letters denote similar items in the accompanying drawings below. Therefore, once an item is defined in an accompanying drawing, the item does not need to be further discussed in subsequent accompanying drawings.

A battery assembly 100 according to embodiments of the present disclosure is specifically described below with reference to the accompanying drawings.

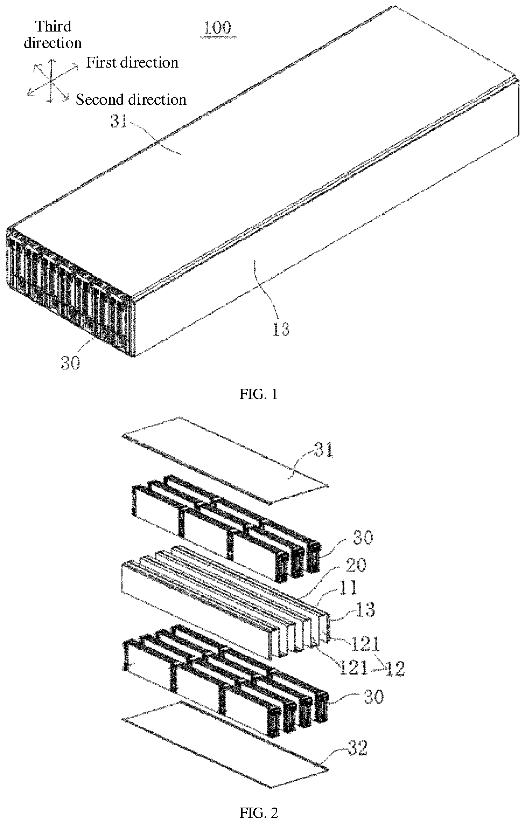

As shown in FIG. 1 to FIG. 6, the battery assembly 100 according to the embodiments of the present disclosure includes an inner housing 20 and a battery module 30.

Specifically, an accommodation space 12 is defined in the inner housing 20. A deformation buffer portion 11 is arranged on the inner housing 20. The deformation buffer portion 11 is deformable through contraction to contract the accommodation space 12. The battery module 30 is arranged in the accommodation space 12. When the deformation buffer portion 11 is deformed through contraction, the accommodation space 12 contracts, and the inner housing 20 abuts against the battery module 30.

In other words, the battery assembly 100 according to the embodiment of the present disclosure is mainly composed of the inner housing 20 and the battery module 30. The battery assembly 100 of the present disclosure may be a long pouch assembly. In the battery assembly 100, as shown in FIG. 1 to FIG. 3, an accommodation space 12 configured to receive the battery module 30 is formed in the inner housing 20. As shown in FIG. 2, FIG. 4, FIG. 5, and FIG. 6, the deformation buffer portion 11 is arranged on the inner housing 20. The deformation buffer portion 11 is deformable through contraction after withstanding a force, to achieve a purpose of contracting the accommodation space 12. The battery module 30 is mounted in the accommodation space 12. When the deformation buffer portion 11 is deformed through contraction, the accommodation space 12 contracts, and two opposite sides of the inner housing 20 can abut against the battery module 30, to tightly press the battery module 30, thereby ensuring a pretightening force of the battery module 30 in the inner housing 20 and increasing a cycle life of a battery.

Therefore, in the battery assembly 100 according to the embodiments of the present disclosure, the deformation buffer portion 11 that is deformable through contraction is arranged on the inner housing 20, and the accommodation space 12 is arranged in the inner housing 20. After the battery module 30 is loaded into the accommodation space 12, a force may be applied to the inner housing 20, so that the deformation buffer portion 11 on the inner housing 20 is deformed through contraction to contract the accommodation space 12. In this way, it is ensured that the two opposite sides of the inner housing 20 can tightly press the battery module 30 and provide a specific pretightening force for the battery module 30, thereby effectively increasing the cycle life of a battery.

According to an embodiment of the present disclosure, multiple accommodation cavities 121 are defined in the inner housing 20. Each of the accommodation cavities 121 extends in a first direction of the inner housing 20. The multiple accommodation cavities 121 are arranged at intervals in a second direction of the inner housing 20. The multiple accommodation cavities 121 form the accommodation space 12. One battery module 30 is arranged in each accommodation cavity 121. The deformation buffer portion 11 extending in the first direction is arranged on the inner housing 20 on at least one of two opposite sides in a third direction corresponding to each accommodation cavity 121.

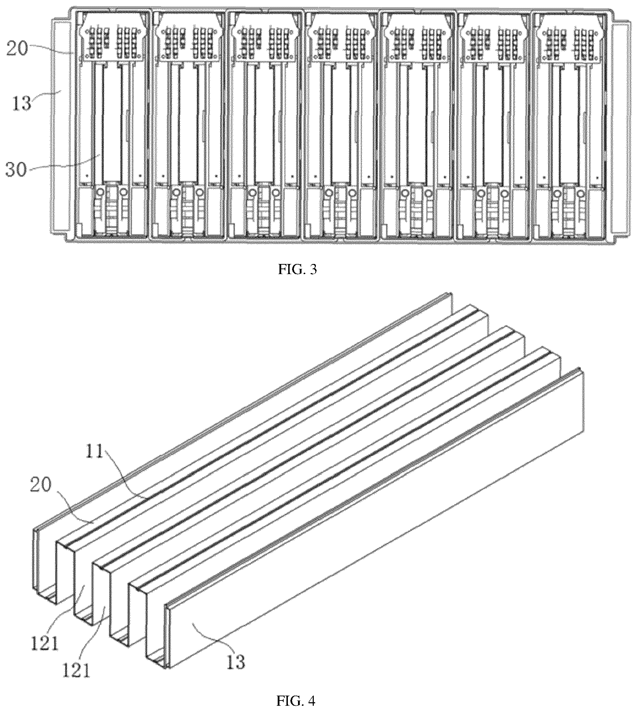

In other words, referring to FIG. 2 and FIG. 4, the multiple accommodation cavities 121 may be formed in the inner housing 20. Each accommodation cavity 121 may extend in the first direction of the inner housing 20, and the multiple accommodation cavities 121 may be arranged at intervals in the second direction of the inner housing 20. In the present disclosure, as shown in FIG. 1, the inner housing 20 may be arranged as a square housing. The first direction of the inner housing 20 may be understood as a length direction (refer to an arrow direction in FIG. 1) of the inner housing 20. The second direction of the inner housing 20 may be understood as a width direction (refer to an arrow direction in FIG. 1) of the inner housing 20. The third direction of the inner housing 20 may be understood as a height direction (refer to an arrow direction in FIG. 1) of the inner housing 20.

The multiple accommodation cavities 121 may jointly form the accommodation space 12. Through arrangement of the multiple accommodation cavities 121 in the inner housing 20, structural strength of the inner housing 20 can also be improved. Each accommodation cavity 121 may be configured to receive the battery module 30. Each battery module 30 may be formed by multiple battery core assemblies 310 connected in series. Each of the battery core assemblies 310 includes at least one battery core 311. When the battery core assembly 310 includes at least two battery cores 311, the battery cores 311 may be connected in parallel. Each battery module 30 may be loaded into the inner housing 20 from an end of each accommodation cavity 121. A specific mounting gap is formed between each battery module 30 and the accommodation cavity 121, to ensure that the battery module 30 can be smoothly inserted into the accommodation cavity 121. The deformation buffer portion 11 extending in the length direction of the inner housing 20 is arranged on the inner housing 20 on at least one of two opposite sides in the third direction (the height direction) corresponding to each accommodation cavity 121. The deformation buffer portion 11 may be arranged on a side of the inner housing 20 in the height direction, or the deformation buffer portion 11 may be arranged on each of two sides of the inner housing 20 in the height direction. When a force is applied to two opposite sides of the inner housing 20 in the width direction, the deformation buffer portion 11 on the inner housing 20 may contract toward the width direction of the inner housing 20, so that the inner housing 20 can tightly press each battery module 30 to ensure the cycle life of the battery.

According to an embodiment of the present disclosure, multiple grooves are defined in the inner housing 20. A space defined in each of the grooves is one accommodation cavity 121. An opening of each groove is oriented toward a same side of the inner housing 20. The deformation buffer portion 11 is arranged on a side of the inner housing 20 opposite to each opening.

In other words, the multiple grooves are formed in the inner housing 20. The space defined in each groove may be understood as the accommodation cavity 121. The opening of each groove is open toward the same side of the inner housing 20. The deformation buffer portion 11 is arranged on the side (a groove bottom of each groove) of the inner housing 20 opposite to each opening. Through arrangement of the multiple grooves with the same opening direction on the inner housing 20, the battery assembly 100 may be directly put into the inner housing 20 through the opening of each groove. In addition, the force is applied to the two opposite sides of the inner housing 20 in the width direction (the second direction), to enable the deformation buffer portion 11 to be deformed through contraction and provide the pretightening force to a side of the battery module 30.

According to an embodiment of the present disclosure, multiple grooves are defined in the inner housing 20. A space defined in each of the grooves is the accommodation cavity 121. Openings of two adjacent grooves are in opposite directions, and the deformation buffer portion 11 is arranged on a side of the inner housing 20 opposite to each opening.

In other words, as shown in FIG. 4 to FIG. 6, the multiple grooves may be formed in the inner housing 20. The space defined in each groove may be the accommodation cavity 121. The openings of the two adjacent grooves are in opposite directions. The inner housing 20 is constructed as a great wall-shaped structure. The battery assembly 100 forms a U-shaped series structure. The deformation buffer portion 11 is arranged on the side of the inner housing 20 opposite to each opening. The battery module 30 formed by upper-layer series-connected cells may be loaded through an opening above the inner housing 20, and the battery module 30 formed by lower-layer series-connected cells may be loaded through an opening below the inner housing 20. After each battery module 30 is loaded into the accommodation cavity 121, the force is applied to the two opposite sides of the inner housing 20 in the width direction (the second direction), to enable the deformation buffer portion 11 to be deformed through contraction and provide the pretightening force to the side of the battery module 30, thereby increasing the cycle life of the battery assembly 100.

According to an embodiment of the present disclosure, the deformation buffer portion 11 is a concave body recessed toward the accommodation space 12. In a case that the inner housing 20 is squeezed in the second direction, the concave body contracts in the second direction.

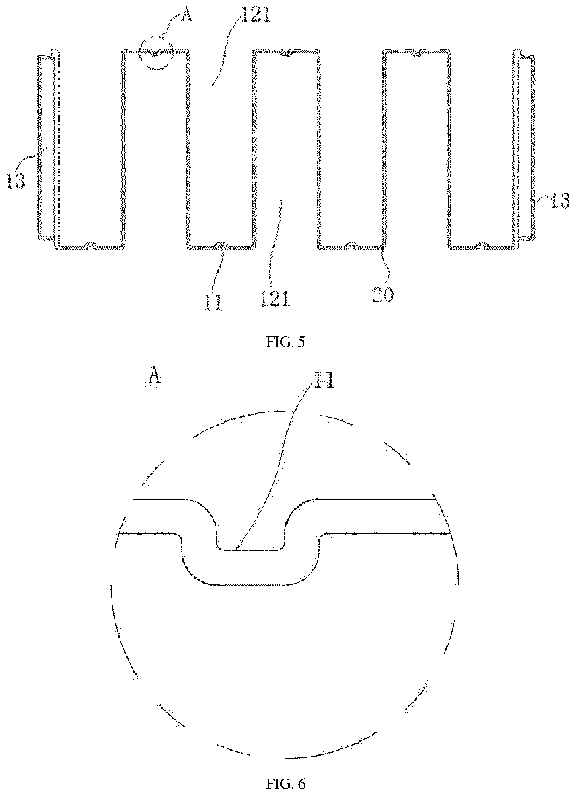

In other words, referring to FIG. 5 and FIG. 6, each deformation buffer portion 11 may be arranged as the concave body recessed toward the corresponding accommodation cavity 121. When the inner housing 20 is squeezed in the width direction, the concave body may be deformed through contraction in the width direction of the inner housing 20, so that each accommodation cavity 121 contracts, to ensure that two side walls of each groove can clamp the battery module 30, thereby increasing the cycle life of the battery. In the present disclosure, the inner housing 20 and the deformation buffer portion 11 are integrally formed, which reduces the molding difficulty and molding costs of the inner housing 20.

In some specific implementations of the present disclosure, the inner housing 20 further includes a pressing plate 13. The pressing plate 13 is arranged on each of two opposite sides of the inner housing 20 in the second direction.

In other words, as shown in FIG. 1, FIG. 2, FIG. 4, and FIG. 5, the inner housing 20 may further include the pressing plate 13. The pressing plate 13 may be arranged on each of two opposite sides of an outermost layer of the inner housing 20 in the width direction.

Through arrangement of the pressing plate 13, the structural strength of the inner housing 20 may be improved, which facilitates application of force to the inner housing 20, and ensures that each accommodation cavity 121 in the inner housing 20 is deformable through contraction.

The battery assembly 100 further includes an upper pulling plate 31 and a lower pulling plate 32. The upper pulling plate 31 and the lower pulling plate 32 are respectively arranged on the two opposite sides of the inner housing 20 in the third direction. The upper pulling plate 31 is connected to the inner housing 20 by bonding, welding, or riveting, and the lower pulling plate 32 is connected to the inner housing 20 by bonding, welding, or riveting.

Referring to FIG. 2, the battery assembly 100 may further include the upper pulling plate 31 and the lower pulling plate 32. The upper pulling plate 31 is arranged above the inner housing 20, to form a top plate of the inner housing 20. The lower pulling plate 32 is arranged below the inner housing 20, to form a bottom plate of the inner housing 20. The upper pulling plate 31 is connected to the inner housing 20 by bonding, welding, or riveting, and the lower pulling plate 32 is connected to the inner housing 20 by bonding, welding, or riveting. The connection manner such as bonding, welding, or riveting is easy for operation and fixation, and facilitates improvement of assembly efficiency of the battery assembly 100.

In the present disclosure, as shown in FIG. 1 and FIG. 2, the inner housing 20 with a great wall-shaped structure (the openings of the two adjacent grooves are in opposite directions) is used as an example. The battery assembly 100 may be composed of the upper pulling plate 31, the inner housing 20 (great wall-shaped), the lower pulling plate 32, upper-layer series-connected cells (upper-layer battery module 30), lower-layer series-connected cells (lower-layer battery module 30). The inner housing 20 is composed of the pressing plates 13 on the two sides and the middle great wall-shaped inner housing (the openings of the two adjacent grooves are in opposite directions). The deformation buffer portion 11 is arranged on the inner housing 20. The upper-layer series-connected cells are loaded through an upper part of the great wall-shaped inner housing 20. The lower-layer series-connected cells are loaded through a lower part of the great wall-shaped inner housing 20. An adhesive layer may be arranged between the great wall-shaped inner housing 20 and the upper-layer series-connected cells and between the great wall-shaped inner housing 20 and the lower-layer series-connected cells. The adhesive layer may alternatively be arranged between the upper pulling plate 31 and the upper-layer series-connected cells and between the lower pulling plate 32 and the lower-layer series-connected cells. During assembly of the battery assembly 100, the battery modules 30 connected in series are first put into the great wall-shaped inner housing 20. Then two sides of the inner housing 20 in the width direction are tightly pressed, so that the deformation buffer portion 11 contracts to tightly press the battery module 30. Finally, the upper pulling plate 31 and the lower pulling plate 32 are mounted. The upper pulling plate 31 and the lower pulling plate 32 are respectively connected to the great wall-shaped inner housing 20 as a whole by bonding, welding, or riveting, thereby effectively increasing the cycle life of the battery.

In a word, in the battery assembly 100 according to the embodiments of the present disclosure, the deformation buffer portion 11 that is deformable through contraction is arranged on the inner housing 20, and the accommodation space 12 is arranged in the inner housing 20. After the battery module 30 is loaded into the accommodation space 12, a force may be applied to the inner housing 20, so that the deformation buffer portion 11 on the inner housing 20 is deformed through contraction to contract the accommodation space 12. In this way, it is ensured that the two opposite sides of the inner housing 20 can tightly press the battery module 30 and provide a specific pretightening force for the battery module 30, thereby effectively increasing the cycle life of a battery.

According to a second aspect of the present disclosure, a battery pack is provided, including the battery assembly 100 in the above embodiments. Since the battery assembly 100 according to the embodiments of the present disclosure has the above technical effects, the battery pack according to the embodiment of the present disclosure should also have the corresponding technical effects. To be specific, the battery pack of the present disclosure can provide a pretightening force for cells in the battery pack by using the battery assembly 100, thereby effectively increasing a cycle life of a battery.

According to a third aspect of the present disclosure, a battery pack is provided.

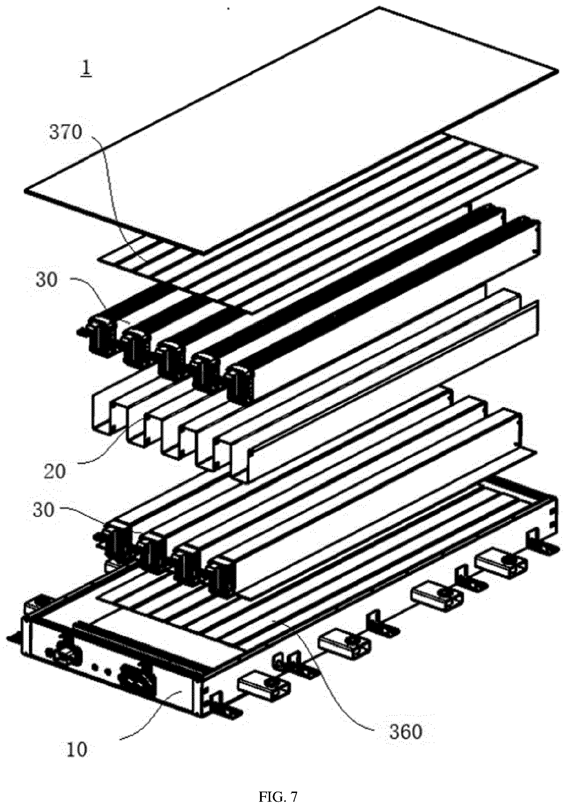

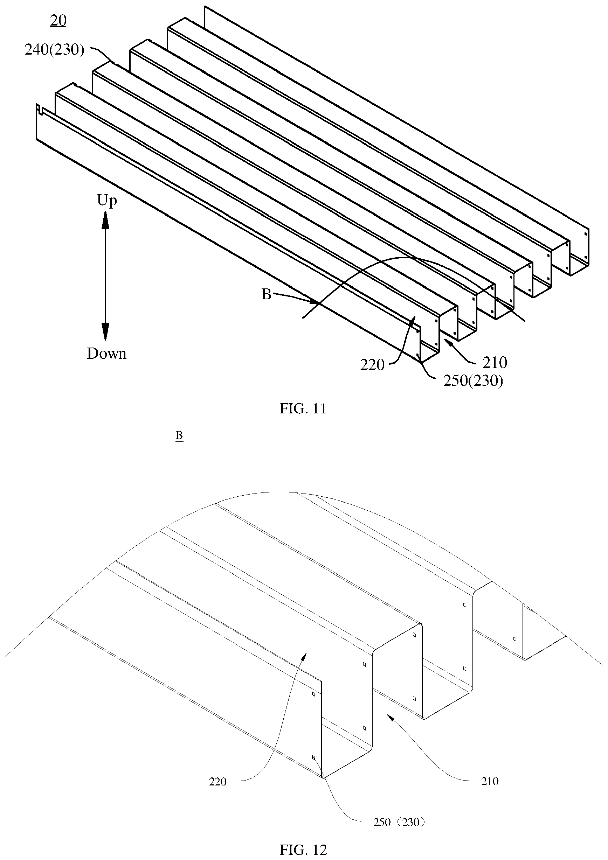

A battery pack 1 according to the embodiment of the present disclosure is described below with reference to FIG. 7 to FIG. 15, including an outer tray 10, the inner housing 20, and multiple battery modules 30.

Specifically, the inner housing 20 is arranged in the outer tray 10. The inner housing 20 is bent and forms multiple first grooves 210 and multiple second grooves 220 staggered from each other. Openings of the first grooves 210 are oriented in an opposite direction to openings of the second grooves 220. An inner housing positioning portion 230 is further arranged on the inner housing 20. The battery module 30 is arranged in each of the first groove 210 and the second groove 220. The battery module 30 includes an end portion spacer 330 arranged at an end portion of the battery module. The end portion spacer 330 is arranged at the end portion of the battery module 30. A battery positioning portion 350 is arranged on the end portion spacer 330. The battery positioning portion 350 is positioned to mate with the inner housing positioning portion 230.

Moreover, the battery module 30 further includes multiple battery core assemblies 310 connected in series, a middle spacer 320, and a protective film 340. The middle spacer 320 is arranged between adjacent battery core assemblies 310, and the middle spacer and the multiple battery core assemblies 310 are arranged in the protective film 340. Each of the battery core assemblies 310 includes multiple battery cores 311. The multiple battery cores 311 may be connected in parallel.

It may be understood that during construction of the battery pack 1, the outer tray 10 is configured to bear the inner housing 20 and the battery module 30, which not only provides a position for assembly of the battery module 30 and the inner housing 20 to facilitate the construction of the battery pack 1, but also can provide protection for the inner housing 20 and the battery module 30 mounted in the battery pack.

During construction of the inner housing 20, the inner housing 20 is bent and has multiple first grooves 210 and multiple second grooves 220 staggered from each other formed thereon. The first grooves 210 are arranged adjacent to the second grooves 220. In this way, adjacent battery modules 30 are configured to be separated through the inner housing 20, to avoid impact on the adjacent battery modules 30 due to thermal runaway in the battery module 30, thereby improving use safety of the battery pack 1.

In addition, the battery module 30 is configured to be composed of multiple battery core assemblies 310. Each battery core assembly 310 is configured to be composed of multiple battery cores 311. The middle spacers 320 are among the multiple battery core assemblies 310. The middle spacers 320 are connected to the battery cores 311, and may space the multiple battery core assemblies 310 apart. In this way, through arrangement of the middle spacers 320 among the multiple battery core assemblies 310, the middle spacer 320 can support and protect tabs of adjacent battery cores 311, thereby protecting the tabs of the adjacent battery cores 311. In addition, the middle spacer 320 is configured to be connected and assembled to the multiple battery cores 311, to facilitate connection and assembly of the multiple battery core assemblies 310, and improve assembly efficiency. In addition, the end portion spacer 330 is further arranged at an end portion of the battery core 311. The end portion spacer 330 is configured to be limited at two ends of the battery module 30, to improve structural stability of the battery module 30. The protective film 340 is arranged on an outer side of the battery module 30, to protect the battery module 30 and increase a service life of the battery pack 1.

Moreover, the battery positioning portion 350 is further arranged on the end portion spacer 330. The battery positioning portion 350 is configured to be positioned to mate with the inner housing positioning portion 230 on the inner housing 20, so that after the battery module 30 is assembled, the battery positioning portion 350 is configured to be mated with the inner housing positioning portion 230, to simplify the process of assembling the battery module 30 to the inner housing 20, thereby improving the assembly efficiency of the battery pack 1. In addition, after the battery module 30 is assembled onto the inner housing 20, the battery positioning portion 350 is mated with the inner housing positioning portion 230, so that the assembly of the battery module 30 on the inner housing 20 is more reliable. In this way, the structure of the battery pack 1 is more stable, to improve use performance of the battery pack 1.

In the battery pack 1 according to the embodiments of the present disclosure, the battery positioning portion 350 and the inner housing positioning portion 230 are arranged and positioned to mate with each other, which not only can simplify the assembly process of the battery pack 1 to improve assembly efficiency, but also can enable more stable connection and assembly between the battery module 30 and the inner housing 20, thereby improving the use performance of the battery pack 1.

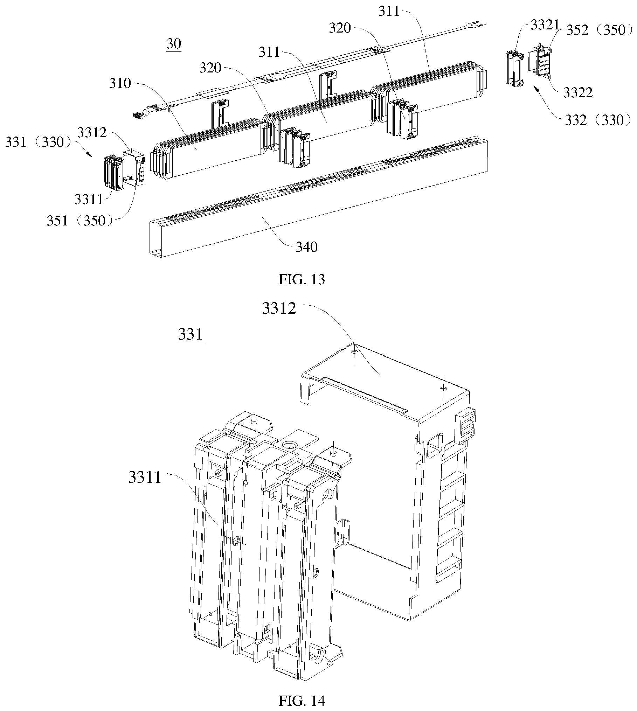

In some embodiments, as shown in FIG. 13, the end portion spacer 330 includes a first end portion spacer 331 and a second end portion spacer 332 arranged at two end portions of the battery module 30. A first battery positioning portion 351 is arranged on the first end portion spacer 331, and a second battery positioning portion 352 is arranged on the second end portion spacer 332. The inner housing positioning portion 230 includes a first inner housing positioning portion 240 and a second inner housing positioning portion 250. The first inner housing positioning portion 240 and the second inner housing positioning portion 250 are respectively arranged on two ends of the first groove 210. The first inner housing positioning portion 240 and the second inner housing positioning portion 250 are respectively arranged on two ends of the second groove 220. The first inner housing positioning portion 240 is positioned to mate with the first battery positioning portion 351, and the second inner housing positioning portion 250 is positioned to mate with the second battery positioning portion 352.

In this way, the first end portion spacer 331 and the second end portion spacer 332 are respectively arranged on two ends of the battery module 30. Since the first battery positioning portion 351 arranged on the first end portion spacer 331 is configured to be positioned to mate with the first inner housing positioning portion 240 arranged on the inner housing 20, and the second battery positioning portion 352 arranged on the second end portion spacer 332 is configured to be positioned to mate with the second inner housing positioning portion 250 arranged on the inner housing 20, the connection and assembly of the battery module 30 on the inner housing 20 are more reliable.

In some specific embodiments, the first battery positioning portion 351 is arranged on at least one side of the first end portion spacer 331 and is constructed as a limiting bump. The first inner housing positioning portion 240 is constructed as a limiting hole. The limiting bump is fitted into the limiting hole.

It should be noted that, a part of the limiting hole is provided on a side plate of the inner housing 20, and an other part of the limiting hole is provided on a bottom plate of the inner housing 20. Through this arrangement, during construction of the limiting hole on the inner housing, the limiting hole can be conveniently provided on the inner housing 20, so that ejection of the inner housing 20 is simpler and more reliable, thereby improving production efficiency.

It may be understood that the first battery positioning portion 351 is constructed as the limiting bump. Since the limiting bump has a more stable structure, a better limiting effect is achieved between the battery module 30 and the inner housing 20 after the limiting bump is mounted to the limiting hole. In this way, the assembly of the battery module 30 on the inner housing 20 is more reliable.

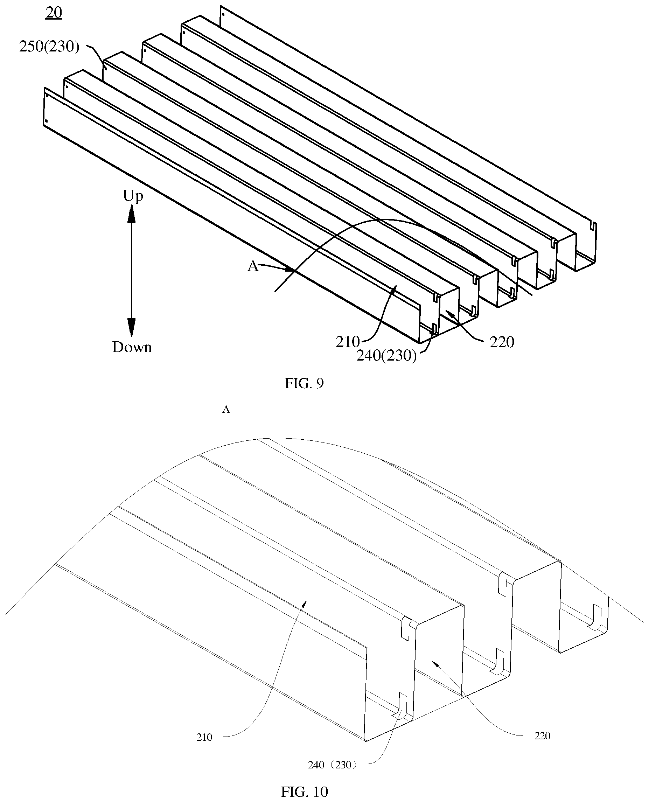

In some specific embodiments, the limiting bump is arranged on a side of the first end portion spacer 331. A groove wall of the first groove 210 and a groove wall of the second groove 220 each are provided with two corresponding limiting holes. The limiting bump is positioned to mate with the limiting hole. It should be noted that, the limiting bump is configured to be formed on the side of the first end portion spacer 331. When the battery module 30 is assembled to the first groove 210 and the second groove 220, the limiting bump is placed in the limiting hole and is positioned to mate with the limiting hole. The limiting hole on the first groove 210 is arranged close to the limiting hole on the second groove 220, as shown in FIG. 10. The limiting hole on the first groove 210 and the limiting hole on the second groove 220 may be provided on a common groove wall of the first groove 210 and the second groove 220. The first groove 210 and the second groove 220 are arranged adjacent to each other, and therefore the first groove 210 and the second groove 220 have the common groove wall. To be specific, the groove wall of the first groove 210 is also the groove wall of the second groove 220. A part of the limiting hole is provided on the common groove wall of the first groove 210 and the second groove 220.

In this way, the limiting bump is arranged on the side of the first end portion spacer 331, so that the limiting bump is configured to be mated with the limiting hole when the battery module 30 is assembled with the first groove 210 or the second groove 220, which provides a fool-proofing function during the assembly of the battery module 30, to facilitate connection and assembly of the battery module 30 and the inner housing 20, thereby improving the assembly efficiency between the battery module 30 and the inner housing 20.

In some embodiments, as shown in FIG. 14, the first end portion spacer 331 includes multiple first inner connectors 3311 and an outer spacing frame 3312. The multiple first inner connectors 3311 are arranged in the outer spacing frame 3312. The limiting bump is arranged on the outer spacing frame 3312. It may be understood that the first inner connector 3311 is configured to detachably connect to the outer spacing frame 3312. The first inner connector 3311 is connected and assembled into the outer spacing frame 3312 through detachable connection, which can facilitate connection and assembly of the first end portion spacer 331. In addition, the outer spacing frame 3312 not only provides a position for connection of the first inner connector 3311 to facilitate connection and assembly of the first inner connector 3311, which not only can improve assembly efficiency and achieve a more reliable structure of the first end portion spacer 331, but also can enable the outer spacing frame 3312 to protect the first inner connector 3311, thereby improving use performance of the first end portion spacer 331. In addition, the limiting bump is arranged on the outer spacing frame 3312, so that positioning and mating between the limiting bump and the limiting hole are more reliable, and assembly of the battery pack 1 is more stable.

In some specific embodiments, the second battery positioning portion 352 is arranged on at least one side of the second end portion spacer 332 and is constructed as an elastic snap. The second inner housing positioning portion 250 is constructed as an engagement hole, and the elastic snap is engaged in the engagement hole. In this way, the elastic snap is used because the elastic snap is suitable for elastic deformation during mounting, to facilitate the connection and assembly between the second battery positioning portion 352 and the second inner housing positioning portion 250, thereby improving the assembly efficiency.

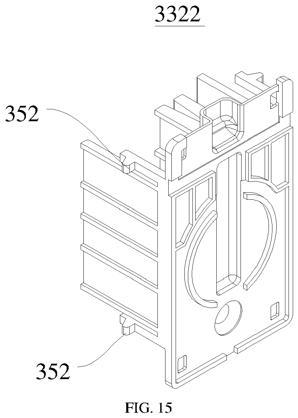

In some embodiments, as shown in FIG. 15, the elastic snap is arranged on each of two sides of the second end portion spacer 332, and at least two elastic snaps arranged at intervals up and down are arranged on each side of the second end portion spacer 332. A groove wall of each of the first groove 210 and the second groove 220 is provided with the engagement hole, and the elastic snap is engaged with the engagement hole.

It should be noted that, the elastic snap is arranged on the second end portion spacer 332. During assembly of adjacent battery modules 30 on the inner housing 20, the second end portion spacers 332 on the adjacent battery modules 30 may be staggered from each other, to cause the elastic snaps on the adjacent battery modules 30 to be connected in the engagement holes on the inner housing 20 in a staggered manner. In this way, the adjacent battery modules 30 can be stably and reliably connected to the inner housing 20, so that the connection between the battery module 30 and the inner housing 20 is more reliable.

In some embodiments, as shown in FIG. 13, the second end portion spacer 332 includes multiple second inner connectors 3321 and an outer protective cover 3322. The multiple second inner connectors 3321 are arranged in the outer protective cover 3322 and are respectively connected to end portions of the multiple battery core assemblies 310. The elastic snap is arranged on the outer protective cover 3322. It should be noted that, the second inner connector 3321 is connected to a sampling nickel sheet, and the second inner connector 3321 is connected to the battery core 311.

It may be understood that the second inner connector 3321 is configured to be arranged on a side of the outer protective cover 3322 toward the battery core 311, so that the outer protective cover 3322 can protect the second inner connector 3321 and the battery core 311 from a side facing away from the battery core 311, thereby improving use safety of the battery module 30. In addition, the elastic snap arranged on the outer protective cover 3322 can be engaged with the engagement hole on the inner housing 20, to fix connection between the battery module 30 and the inner housing 20, thereby achieving more reliable assembly and connection between the battery module 30 and the inner housing 20.

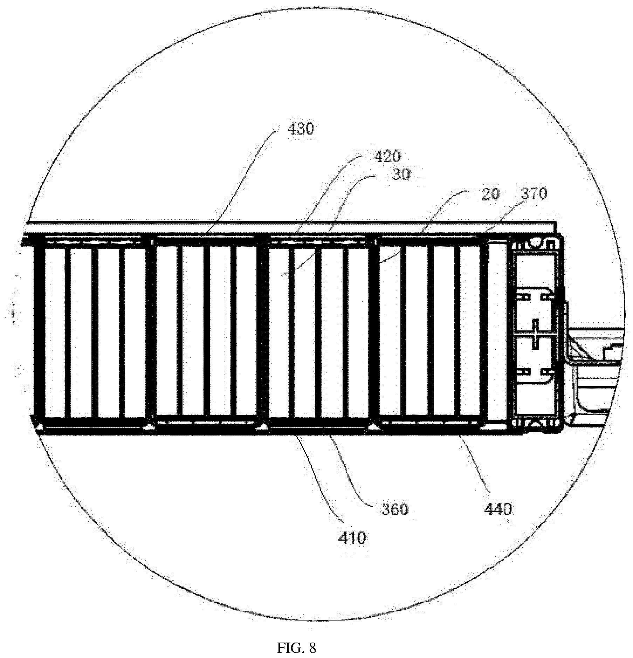

In some embodiments, as shown in FIG. 8, the opening of the first groove 210 is upward, a first adhesive layer 410 is arranged between a bottom plate of the first groove 210 and a bottom of the outer tray 10, a first buffer pad 360 is arranged on a bottom of the battery module 30 in the first groove 210, and a second adhesive layer 420 is arranged on a top of the battery module 30 in the first groove 210; and/or the opening of the second groove 220 is downward, a third adhesive layer 430 is arranged on an outer side of a top plate of the second groove 220, a second buffer pad 370 is arranged between a top of the battery module 30 in the second groove 220 and the top plate of the second groove 220, and a fourth adhesive layer 440 is arranged on a bottom of the battery module 30 in the second groove 220.

It should be noted that, the first adhesive layer 410 and the third adhesive layer 430 are structural adhesives. The second adhesive layer 420 and the fourth adhesive layer 440 are thermal conductive adhesives or mixtures of thermal conductive adhesives and some structural adhesives.

It may be understood that the first adhesive layer 410 is arranged between the bottom plate of the first groove 210 and the outer tray 10. When the inner housing 20 is connected to the outer tray 10, the inner housing 20 is configured to be bonded and fixed to the outer tray 10 through the first adhesive layer 410. In this way, the assembly process of the battery pack 1 may be simplified to improve assembly efficiency, and the connection between the inner housing 20 and the outer tray 10 is more stable, to improve structural stability of the battery pack 1, thereby realizing safer and more reliable use of the battery pack 1. Similarly, the third adhesive layer 430 arranged on the top plate of the second groove 220 has the same structure as the first adhesive layer 410. A person skilled in the art can deduce the function and effect of the third adhesive layer 430 from the first adhesive layer 410. Details are not described herein.

In addition, when the battery module 30 is assembled in the first groove 210, the first buffer pad 360 is arranged between the battery module 30 and the bottom of the first groove 210, so that assembly of the battery module 30 on the inner housing 20 has a desirable buffer and shock-proof effect, and the use of the battery pack 1 is safer and more reliable. The second buffer pad 370 has the same structure as the first buffer pad 360. A person skilled in the art can deduce performance of the second buffer pad 370 from performance of the first buffer pad 360. Details are not described herein. In addition, the second adhesive layer 420 and the fourth adhesive layer 440 arranged on the battery module 30 are configured to fix the battery module 30 after the battery module 30 is assembled, so that the structure of the battery pack 1 is more stable and reliable.

According to a fourth aspect of the present disclosure, a vehicle is provided, including the battery assembly 100 in the above embodiments. Since the battery assembly 100 according to the embodiments of the present disclosure has the above technical effects, the vehicle according to the embodiment of the present disclosure should also have the corresponding technical effects. To be specific, the vehicle of the present disclosure can provide a pretightening force for cells in the battery assembly 100 by using the battery assembly 100, thereby effectively increasing a cycle life of a battery.

Certainly, for a person skilled in the art, the battery assembly 100, the battery pack, and other structures and operating principles of the vehicle may be understood and can be implemented. Details are not described in the present disclosure again.

According to a fifth aspect of the present disclosure, a vehicle is provided, including the battery pack 1 in any of the above.

The battery pack 1 described above is arranged in the vehicle. When the battery positioning portion 350 and the inner housing positioning portion 230 are respectively arranged on the battery module 30 and the inner housing 20 in the battery pack 1 and are positioned to mate with each other, not only the assembly process of the battery pack 1 may be simplified to improve assembly efficiency, but also connection and assembly between the battery module 30 and the inner housing 20 are more stable, so that the use of the battery pack 1 is safer and more reliable, thereby improving the use safety of the vehicle.

Other compositions and operations of the vehicle according to the embodiments of the present disclosure are known to a person of ordinary skill in the art, and therefore are not described in detail herein.

In the descriptions of this specification, the description of reference terms such as "one embodiment", "some embodiments", "an exemplary embodiment", "an example", "a specific example", or "some examples" means that specific features, structures, materials, or characteristics described in combination with the embodiment or examples are included in at least one embodiment or example of the present disclosure. In this specification, schematic descriptions of the foregoing terms do not necessarily refer to the same embodiment or example.

Although the embodiments of the present disclosure have been shown and described, a person of ordinary skill in the art may understand that various changes, modifications, replacements, and variations may be made to the embodiments without departing from the principles and spirit of the present disclosure, and the scope of the present disclosure is defined by the claims and their equivalents.

Although some specific embodiments of the present disclosure have been described in detail by using the examples, a person skilled in the art should understand that the foregoing examples are merely for description and are not intended to limit the scope of the present disclosure. A person skilled in the art should understand that modifications may be made to the foregoing embodiments without departing from the scope and spirit of the present disclosure. The scope of the present disclosure is defined by the appended claims.

## Claims

1. A battery assembly, comprising:
an inner housing, a plurality of grooves being defined in the inner housing, and a space defined in each of the grooves being an accommodation cavity, to enable a plurality of accommodation cavities to be defined in the inner housing, and the plurality of accommodation cavities forming an accommodation space; and
a battery module, arranged in each of the accommodation cavities, to enable the battery module to be arranged in the accommodation space.

2. The battery assembly according to claim 1, wherein a deformation buffer portion is arranged on the inner housing; the deformation buffer portion is deformable through contraction to contract the accommodation space; and
when the deformation buffer portion is deformed through contraction, the accommodation space contracts, and the inner housing abuts against the battery module.

3. The battery assembly according to claim 2, wherein each accommodation cavity extends in a first direction of the inner housing; the plurality of accommodation cavities are arranged at intervals in a second direction of the inner housing; and the deformation buffer portion extending in the first direction is arranged on the inner housing on at least one of two opposite sides in a third direction corresponding to each accommodation cavity.

4. The battery assembly according to claim 3, wherein an opening of each groove is oriented toward a same side of the inner housing; and the deformation buffer portion is arranged on a side of the inner housing opposite to each opening.

5. The battery assembly according to claim 3, wherein openings of two adjacent grooves are in opposite directions; and the deformation buffer portion is arranged on a side of the inner housing opposite to each opening.

6. The battery assembly according to any of claims 2 to 5, wherein the deformation buffer portion is a concave body recessed toward the accommodation space; and in a case that the inner housing is squeezed in the second direction, the concave body contracts in the second direction.

7. The battery assembly according to any of claims 1 to 6, wherein the inner housing further comprises a pressing plate, arranged on each of two opposite sides of the inner housing in the second direction.

8. The battery assembly according to any of claims 1 to 7, further comprising an upper pulling plate and a lower pulling plate, the upper pulling plate and the lower pulling plate being respectively arranged on the two opposite sides of the inner housing in the third direction.

9. The battery assembly according to claim 8, wherein the upper pulling plate is connected to the inner housing by bonding, welding, or riveting; and the lower pulling plate is connected to the inner housing by bonding, welding, or riveting.

10. The battery assembly according to any of claims 1 to 9, wherein the plurality of grooves comprise a first groove and a second groove; the inner housing is bent and forms a plurality of first grooves and a plurality of second grooves staggered from each other; openings of the first grooves are oriented in an opposite direction to openings of the second grooves; an inner housing positioning portion is further arranged on the inner housing; the battery module comprises an end portion spacer arranged at an end portion of the battery module; a battery positioning portion is arranged on the end portion spacer; and the battery positioning portion is positioned to mate with the inner housing positioning portion.

11. The battery assembly according to claim 10, wherein the end portion spacer comprises a first end portion spacer and a second end portion spacer arranged at two end portions of the battery module; a first battery positioning portion is arranged on the first end portion spacer; a second battery positioning portion is arranged on the second end portion spacer;
the inner housing positioning portion comprises a first inner housing positioning portion and a second inner housing positioning portion; the first inner housing positioning portion and the second inner housing positioning portion are respectively arranged on two ends of the first groove; the first inner housing positioning portion and the second inner housing positioning portion are respectively arranged on two ends of the second groove;
the first inner housing positioning portion is positioned to mate with the first battery positioning portion; and the second inner housing positioning portion is positioned to mate with the second battery positioning portion.

12. The battery assembly according to claim 11, wherein the first battery positioning portion is arranged on at least one side of the first end portion spacer and is constructed as a limiting bump; the first inner housing positioning portion is constructed as a limiting hole; and the limiting bump is fitted into the limiting hole.

13. The battery assembly according to claim 12, wherein the limiting bump is arranged on a side of the first end portion spacer; a groove wall of the first groove and a groove wall of the second groove each are provided with two limiting holes; and the limiting bump is positioned to mate with the limiting hole.

14. The battery assembly according to claim 12 or 13, wherein the first end portion spacer comprises a plurality of first inner connectors and an outer spacing frame; the plurality of first inner connectors are arranged in the outer spacing frame; and the limiting bump is arranged on the outer spacing frame.

15. The battery assembly according to any of claims 11 to 14, wherein the second battery positioning portion is arranged on at least one side of the second end portion spacer and is constructed as an elastic snap; the second inner housing positioning portion is constructed as an engagement hole; and the elastic snap is engaged in the engagement hole.

16. The battery assembly according to claim 15, wherein the elastic snap is arranged on each of two sides of the second end portion spacer; at least two elastic snaps arranged at intervals are arranged on each side of the second end portion spacer; a groove wall on each of two sides of the first groove and the second groove is provided with the engagement hole; and the elastic snap is engaged with the engagement hole.

17. The battery assembly according to claim 15 or 16, wherein the second end portion spacer comprises a plurality of second inner connectors and an outer protective cover; the plurality of second inner connectors are arranged in the outer protective cover; and the elastic snap is arranged on the outer protective cover.

18. The battery assembly according to any of claims 1 to 17, wherein the battery module further comprises a plurality of series-connected battery core assemblies, a middle spacer, and a protective film; the middle spacer is arranged between adjacent battery core assemblies; and the plurality of series-connected battery core assemblies are arranged in the protective film.

19. A battery pack, comprising the battery assembly according to any of claims 1 to 18.

20. The battery pack according to claim 19, further comprising an outer tray, the inner housing being arranged in the outer tray.

21. The battery pack according to claim 20, wherein the opening of the first groove is upward; a first adhesive layer is arranged between a bottom plate of the first groove and a bottom of the outer tray; a first buffer pad is arranged on a bottom of the battery module in the first groove; a second adhesive layer is arranged on a top of the battery module in the first groove; and/or
the opening of the second groove is downward; a third adhesive layer is arranged on an outer side of a top plate of the second groove; a second buffer pad is arranged between a top of the battery module in the second groove and the top plate of the second groove; and a fourth adhesive layer is arranged on a bottom of the battery module in the second groove.

22. A vehicle, comprising the battery assembly according to any of claims 1 to 18 or the battery pack according to any of claims 19 to 21.
